# DEMANDE DE BREVET EUROPEEN

(11) **EP 2 395 231 A2**
(43) Date de publication de la demande: **14.12.2011**
(21) Numéro de dépôt: 11305434.0
(22) Date de dépôt: 13.04.2011
(51) Int. Cl.: F03B 1/00, F03D 3/02, F03D 3/06

(54) **Agencement de pales d'un mobile tournant tel qu'une hydrolienne**

(30) Priorité: 13.04.2010 FR 1052810
(71) Demandeur: Mourier, Frederic, 17137 Esnandes (FR); Nattier, Clement, 17440 Aytre (FR)
(72) Inventeur: Mourier, Frederic, 17137 Esnandes (FR); Nattier, Clement, 17440 Aytre (FR)
(74) Mandataire: Fantin, Laurent

(57) **Abrégé**

L'objet de l'invention est un agencement des pales (10) d'un mobile tournant tel qu'une hydrolienne comprenant une platine supérieure (125) et une platine inférieure (12I) et au moins deux pales (10) et un axe de rotation ZZ, central, caractérisé en ce que chaque pale comprend un profil alaire avec un bord d'attaque et un bord de fuite, un extrados et un intrados, ledit bord d'attaque étant disposé à proximité immédiate de la périphérie extérieure de chaque platine et ledit bord de fuite étant orienté vers l'intérieur et décalé par rapport à l'axe de rotation ZZ d'une distance (d), ces pales non jointives générant un passage (22) de recirculation.

L'invention couvre aussi l'hydrolienne réalisée.

## Description

La présente invention concerne un agencement de pales d'un mobile tournant tel qu'une hydrolienne dont le rendement est amélioré.

On connaît les montages de pales d'éolienne dite de type Savonius ou Darrieus. Ces profils présentent des inconvénients bien connus le premier qui dispose d'un faible rendement et d'une rotation irrégulière et le second qui ne démarre que par vent ou courant puissant.

En effet, les éoliennes du type Savonius reçoivent un impact directement dans le creux de pale comme un godet, les pales étant liées au centre. Le démarrage est rapide mais les limites de fonctionnement sont rapidement atteintes.

Quant aux éoliennes type Darrieus, elles fonctionnent comme des ailes en portance uniquement, si bien qu'il faut généralement une puissance de flux importante pour amorcer le démarrage et d'un flux soutenu pour tourner.

Or les applications hydroliennes cherchent de nouveaux profils de façon à augmenter le rendement tout en n'étant pas limité par la puissance du flux d'eau et tout en fonctionnant y compris par faible flux.

Ces énergies renouvelables, si elles ne peuvent se substituer intégralement à l'énergie fossile actuellement, sont d'un avenir certain à condition de pallier certains problèmes spécifiques.

Dans le cas des applications hydrauliques, du fait des contraintes du milieu, il est nécessaire de disposer de dispositifs simples et robustes, d'avoir une plage d'utilisation adaptée aux limites hautes et basses, de réduire aussi les frottements et l'impact des particules sur la partie tournante pour éviter toute usure prématurée, par géo-abrasion sédimentaire et par épibiose.

De plus, une fois obtenu le meilleur rendement issu de la puissance mécanique générée par l'énergie cinétique des flux de fluide, la présente invention apporte aussi des solutions d'intégration des moyens de production d'électricité, généralement dont les usages peuvent être divers ou des moyens de production d'énergie mécanique lorsqu'il y a possibilité d'une utilisation de proximité, ces utilisations étant adaptées aux contraintes environnementales.

La présente invention vise un agencement de pales d'un mobile tournant tel qu'une hydrolienne, travaillant essentiellement en traînée.

On sait que deux pales suffisent pour disposer d'une symétrie mais l'exemple qui va suivre comprend plutôt trois pales pour être optimisé, l'invention couvrant 2 ou 4 pales, voire plus, la limitation étant d'ordre manufacturier et technique. L'agencement est maintenant décrit en détail suivant un mode de réalisation particulier, non limitatif, en regard des dessins qui sont annexés, dessins sur lesquels les différentes figures représentent :
- Figure 1 : une vue en perspective de dessus d'un agencement de pales d'un mobile tournant tel qu'une hydrolienne, selon la présente invention,
- Figure 2 : une vue de pales agencées comme précédemment mais faisant apparaître les pales uniquement,
- Figure 3 : une vue schématique des flux sur les pales de l'agencement des figures 1 et 2,
- Figure 4 : une vue en perspective d'un agencement des pales d'un mobile tournant tel qu'une hydrolienne, selon l'invention, identique au précédent, mais avec un profil simple vrille,
- Figure 5 : une vue superposée des intersections des pales avec les platines faisant apparaître le simple vrillage,
- Figure 6 : une vue en perspective d'un agencement des pales d'un mobile tournant tel qu'une hydrolienne, selon l'invention, identique au précédent, mais avec un profil double vrille et échappements,
- Figure 7 : une vue de dessus de l'agencement de la figure 4,
- Figure 8 : une vue superposée des intersections des pales avec les platines faisant apparaître le double vrillage,
- Figure 9 : une vue d'un agencement avec platines multiples,
- Figure 10 : une vue d'un agencement optimisé.

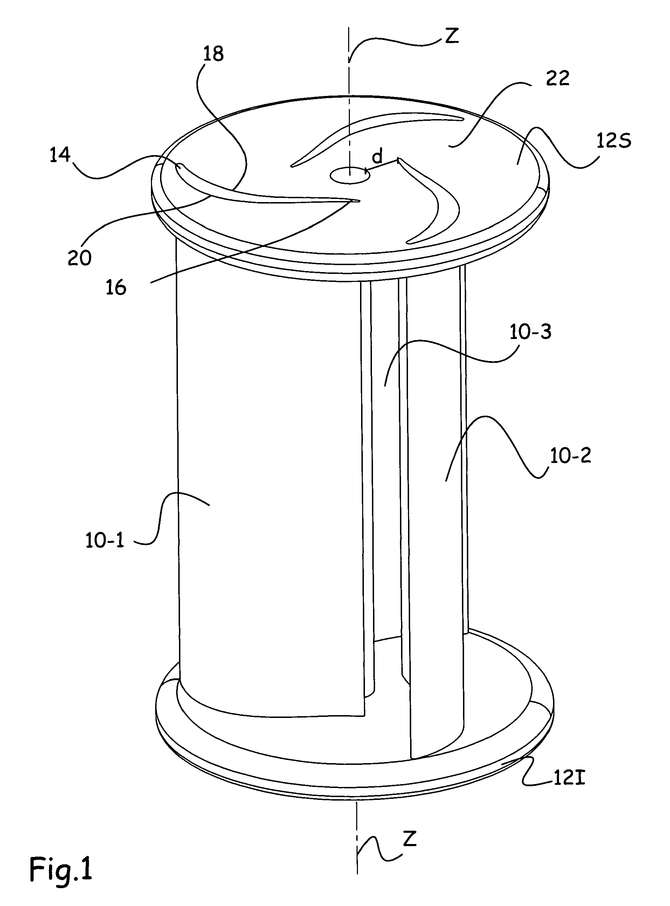

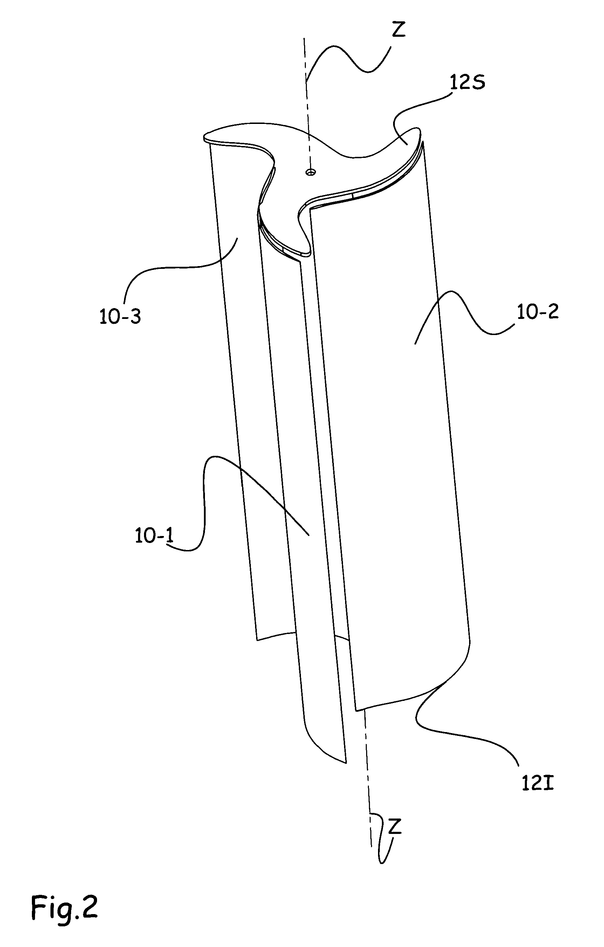

Sur la figure 1, on a représenté un agencement selon la présente invention qui comprend une réalisation optimisée à trois pales sachant que la réalisation à deux pales est tout à fait possible ainsi qu'une fabrication à quatre pales, voire plus. Cette réalisation de la figure 1, également représentée de façon isolée sur la figure 2, comprend trois pales 10-1, 10-2, 10-3 avec deux platines supérieures 125 et 12I inférieure. Ces références sont adoptées pour la simplification de la description mais n'impliquent aucune obligation d'orientation car l'agencement pourrait être horizontal ou incliné sans que cela modifie la portée de la demande.

L'axe ZZ est l'axe de rotation de l'ensemble du rotor R ainsi constitué et se trouve donc dans la position verticale dans le cas présent. C'est un axe de symétrie.

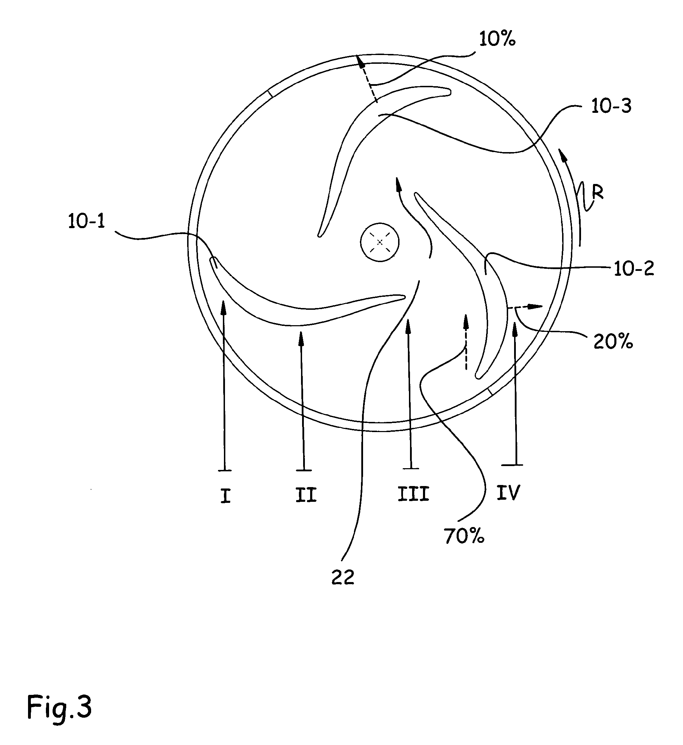

Le flux est orienté perpendiculairement à l'axe de rotation, dite flux transverse. Chaque pale comprend un profil alaire avec un bord d'attaque 14 et un bord de fuite 16, visible sur la figure 3.

Dans le mode de réalisation de la figure 1, le bord 14 d'attaque et le bord 16 de fuite sont rectilignes, parallèles à l'axe de rotation ZZ.

Chaque pale est orientée avec son bord 14 d'attaque à proximité immédiate de la périphérie extérieure et son bord de fuite, vers l'intérieur et décalé par rapport à l'axe de rotation ZZ d'une distance (d). Les pales ne sont donc pas jointives et génèrent un passage 22 de recirculation.

Chaque pale présente aussi une face 18 concave formant un intrados et une face 20 convexe, formant un extrados. La face concave est orientée vers l'intérieur, c'est-à-dire vers l'axe de rotation ZZ.

Sur le schéma de la figure 3, on a représenté la cinématique des flux de façon à permettre la description du fonctionnement.

Le flux est décomposé schématiquement et de façon théorique en 4 sous-flux I/ à IV/.

Le flux I/ est orienté vers la pale 10-1 dans la position retenue pour l'analyse. Ce flux vient donc exercer une action à l'encontre du sens de rotation R, indiqué par une flèche.

Cette action est limitée car le flux vient heurter perpendiculairement l'extrados de la pale, sur l'avant, vers le bord d'attaque, ce qui conduit à générer une force contre réactive limitée du fait de la forme convexe de la surface.

Cette action est orientée vers l'extérieur de l'agencement et le flux est dirigé vers la périphérie extérieure.

Le flux II/ est orienté également vers la même pale 10-1 et ce flux vient heurter perpendiculairement l'extrados de la pale, sur l'arrière, vers le bord de fuite, ce qui conduit à générer une force contre réactive limitée du fait de la forme convexe de la surface.

Le flux II/ est, par contre, dirigé vers la pale 10-2, plus particulièrement vers l'intrados de ladite pale.

Ce flux II/ rejoint le flux III/ qui exerce une action directement sur l'intrados de la pale 10-2, notamment avec la déviation engendrée par le flux II/.

La puissance exercée est très importante, du fait de l'angle et du fait du profil concave, l'effort de rotation de l'ensemble des pales est environ fourni à 70% par l'action du flux III/, ceci n'étant qu'un ordre de grandeur et pour la position optimale.

La circulation est exercée sur l'intrados, du bord 14 d'attaque vers le bord 16 de fuite.

Le flux exerce son action avec un bras de levier maximal puisque le bord 14 d'attaque se situe sur la périphérie du rotor ainsi constitué, à la plus grande distance de l'axe de rotation ZZ.

Ce flux III/ a un effet qui se prolonge car ce flux va échapper par le bord 16 de fuite de l'intrados de la pale 10-2 et va, à son tour, assurer une recirculation vers la pale 10-3, également sur l'intrados mais cette fois-ci du bord 16 de fuite vers le bord 14 d'attaque. Le flux III/ étant alors éjecté de la pale 10-3. Cette effet complémentaire assure environ 10% de la puissance nécessaire pour la mise en rotation des pales, ceci n'étant qu'un ordre de grandeur.

Le flux IV/, quant à lui, vient donc heurter le bord d'attaque 14 de la pale, à l'instar de l'air sur une aile d'aéronef, ce qui provoque un effet de portance sur l'extrados de la pale, du bord 14 d'attaque jusqu'au bord 16 de fuite.

Cet effort exercé contribue à la rotation de l'ensemble du rotor incluant l'ensemble des pales et, pour donner un ordre de grandeur, cette contribution est de 20% de la puissance totale fournie pour la mise en rotation des pales. Sous l'action de ces efforts et plus particulièrement des composantes de ces efforts, le rotor présente un rendement amélioré.

De plus, les risques de cavitation sont diminués par la possibilité de recirculation prévue.

Dans le cas d'une installation en pleine eau pour un fonctionnement en hydrolienne, on note une moindre usure des pales du fait des vitesses limitées de rotation et des frottements moindres sur les pales du fait des fluides chargés en particules, notamment si on compare l'agencement selon la présente invention à celui incluant des hélices simples.

Dans le cas de la présente invention, les efforts sont répartis sur les surfaces et les risques de cavitation sont supprimés car les filets d'eau sont plaqués sur les surfaces.

En outre, la robustesse est améliorée car les pales sont tenues et non libres à une extrémité.

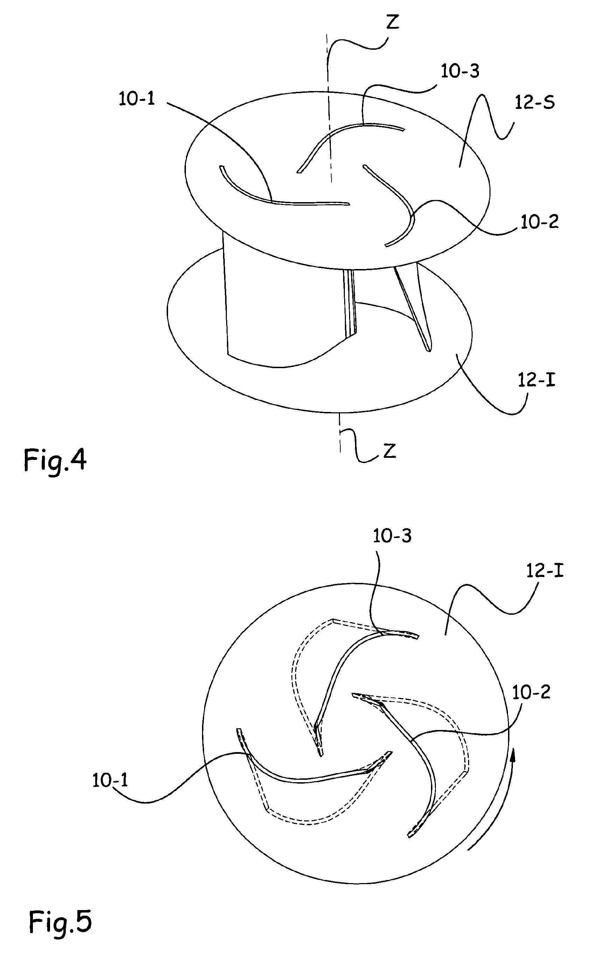

Sur les figures 4 et 5, on a représenté une variante dont le rendement est encore amélioré par une géométrie incluant les mêmes pales que précédemment, cette fois-ci en réalisant un simple vrillage.

Le vrillage consiste à conserver la platine 125, supérieure, telle qu'agencée dans le mode de réalisation précédent et à déplacer vers l'aval, donc dans le sens de la rotation R du rotor, l'intersection du bord 14 d'attaque de la pale par rapport à la platine 12I inférieure.

Simultanément, il est prévu un déplacement vers l'aval, donc dans le sens de la rotation R du rotor également, de l'intersection du bord 16 de fuite de la pale par rapport à la platine 12I inférieure, mais un déplacement moindre.

On note que les bords d'attaque et les bords de fuite restent linéaires dans cette variante.

De ce fait, les effets de concentration sont renforcés, permettant un écoulement dans le sens de la vrille. De plus, lorsque l'extrados de chaque pale pénètre dans le fluide, la résistance est limitée aussi par le fait que la vrille assure également un meilleur écoulement.

Ces écoulements sont dirigés de façon opposée, ce qui limite les effets turbulents au profit d'écoulements plus laminaires.

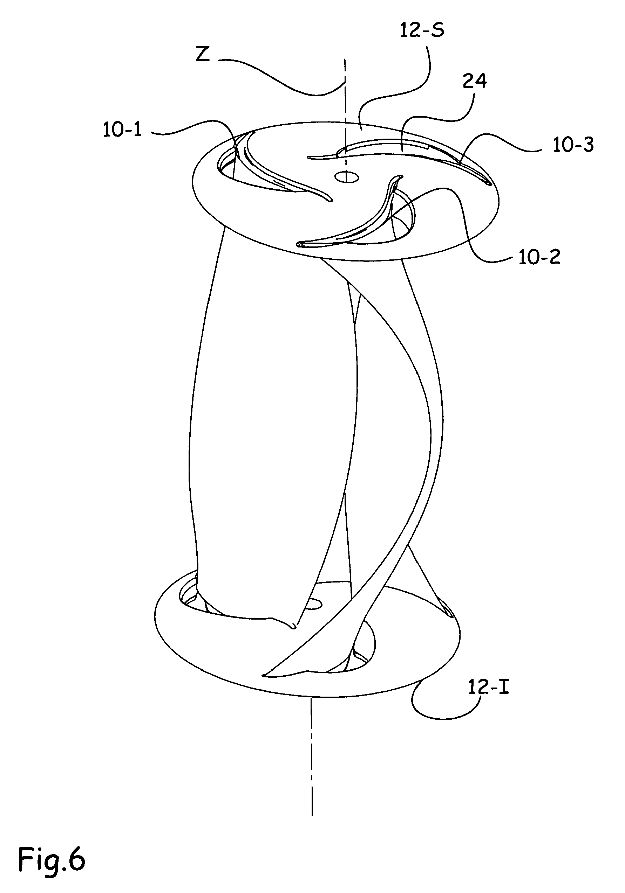

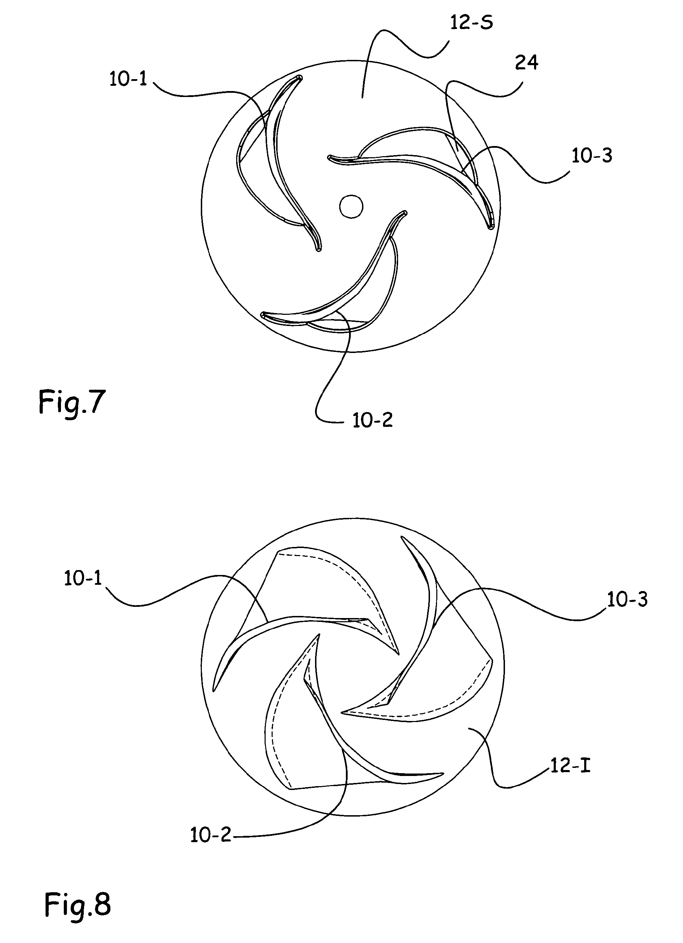

Sur la variante optimisée, représentée sur les figures 6, 7 et 8, les pales présentent un vrillage double et des échappements 24 ménagés à travers les platines 12S, supérieure et 12I. Ces échappements présentent une forme de croissant et sont ménagés immédiatement en amont de l'extrados de chaque pale.

Le vrillage double consiste à prévoir un premier vrillage comme exposé ci-avant puis à réaliser un second vrillage qui confère aux lignes des bords 14 d'attaque et des bords 16 de fuite, des profils courbes.

On note que le ventre de la courbure est orienté dans le sens de rotation R du rotor, de façon à présenter là aussi un meilleur coefficient de pénétration de l'extrados dans le fluide.

Le fluide est alors défléchi vers le haut et vers le bas.

Les échappements 24, prévus dans cette version optimisée, permettent aux courants fluides défléchis de passer à travers les platines 12S supérieure et 12I inférieure.

Ces échappements diminuent donc la pression engendrée sur l'extrados de la pale et donc la résistance à la pénétration de la pale dans le fluide.

Un tel agencement est donc plus efficace que les agencements connus du type Savonius avec les qualités des agencements du type Darrieus en supprimant la fragilité structurelle surtout en application à l'hydrolien.

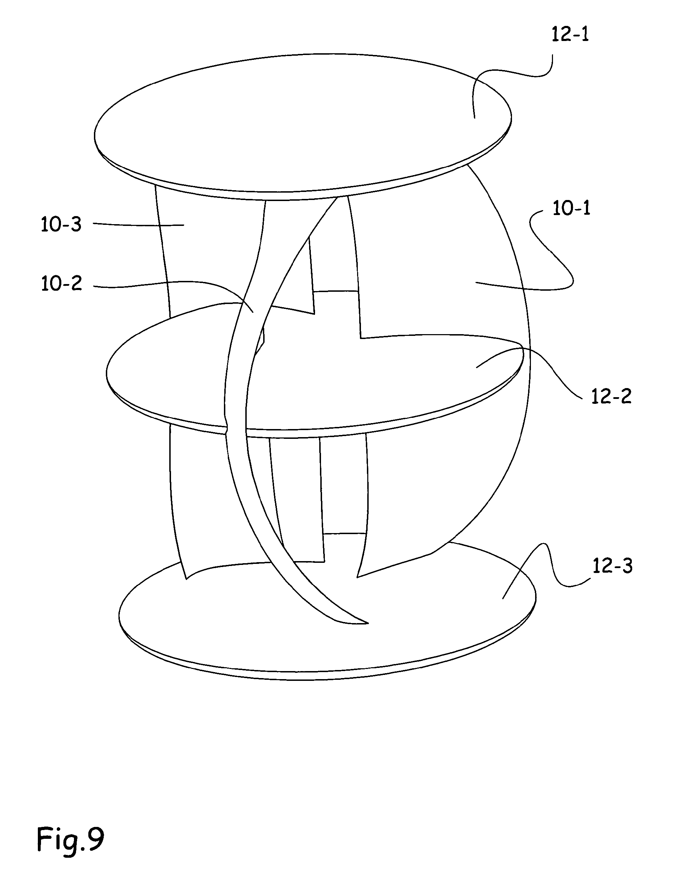

Sur la figure 9, on a représenté une variante de réalisation avec un agencement à plusieurs étages, au moins trois platines, en l'occurrence trois platines étagées, 12-1, 12-2, 12-3, la platine 12-2 étant intermédiaire et les platines 12-1 et 12-2 restant respectivement les platines supérieure et inférieure.

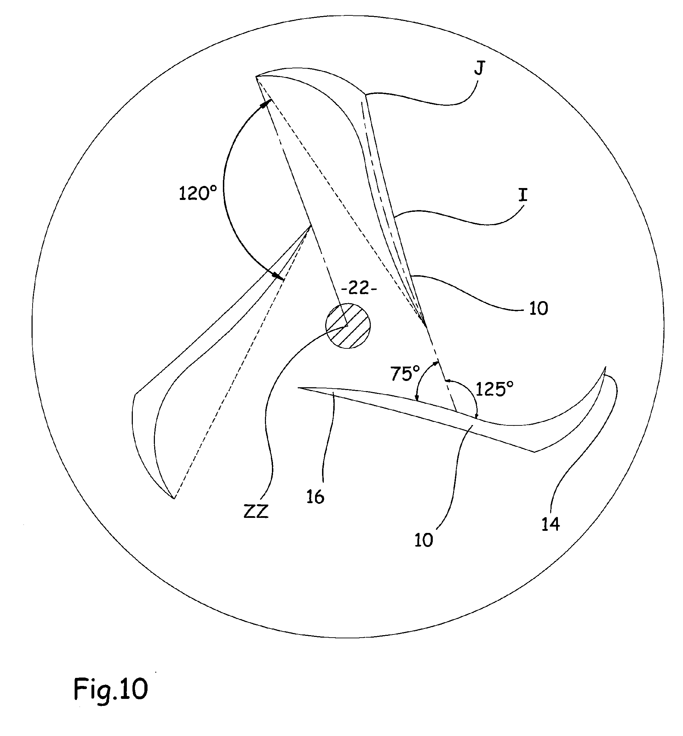

Sur la figure 10, l'agencement de pales représenté est optimisé. On constate que le flux de recirculation vient heurter la pale concernée avec un angle aigu, en l'occurrence de 75°, ce qui accélère également la recirculation.

De façon avantageuse, chaque pale comprend sur sa partie sensiblement radiale une inflexion au point I, ce qui contribue à rendre le profil plus "cabreur" dans le sens de la rotation et à mieux orienter le flux de recirculation sur l'intrados de la pale concernée.

Suivant ce mode de réalisation optimisé, on obtient une vitesse de pale mesurée à son extrémité périphérique supérieure à la vitesse du courant. On a ainsi pu mesurer une vitesse de 1,8 m/s pour un courant de 1 m/s. Ceci résulte bien de l'effet de portance du profil alaire.

Dans ce mode de réalisation préférentiel, on note aussi que l'extrados est agencé avec une forme convexe dont le profil est même aigu J, de sorte à limiter l'impact sur l'extrados de la pale montante.

On note aussi que le bord d'attaque est quasiment tangent au cercle circonscrit de façon à prendre le filet d'eau progressivement et à la dévier progressivement en l'accélérant. Il n'est prévu aucune pièce mobile sur les pales de façon à ne pas perturber les écoulements.

De même, il est possible de prévoir des déflecteurs ou canalisateurs de flux en complément pour diriger le flux de façon optimisée.

Les applications sont nombreuses en milieu hydraulique du fait d'un encombrement moindre.

La solidité est également un atout dans le sens ou la résistance mécanique est importante car le système est isostatique.

Le fonctionnement essentiellement en traînée permet de démarrer la rotation même avec une faible vitesse de fluide, de plus, indépendamment de la direction du fluide.

Un tel agencement travaille strictement de la même façon que l'axe de rotation soit vertical, incliné ou horizontal.

La dégradation des pales, liée aux frottements et à la géo-abrasion, est limitée du fait du travail majoritairement en traînée.

Les matériaux utilisables pour la réalisation sont très variés car il n'y a pas de contraintes mécaniques importantes nécessitant des matériaux spécifiques.

Il est même possible pour les applications en tant qu'hydrolienne de réaliser l'ensemble avec une flottabilité destinée à compenser au moins partiellement le poids. Les paliers de rotation de l'axe sont d'autant plus soulagés.

La production d'énergie en utilisant l'agencement selon la présente invention est particulièrement avantageuse car les aimants des générateurs de courant électrique peuvent être logés dans les platines supérieures et inférieures, en périphérie, sans contact avec les bobinages portés par un châssis fixe. De plus, une couche de résine assure l'étanchéité tout en autorisant le refroidissement dans le cas d'un montage en hydrolienne.

La vitesse périphérique au niveau de l'entrefer entre les bobines et les aimants permanents est naturellement maximale et permet de ne pas utiliser de démultiplication mécanique bruyante et fragile.

Les applications en milieu marin par exemple sont les hydro générateurs. On note qu'il est aussi possible de disposer d'un tel générateur sur une structure navigante car il peut être descendu ou escamoté dans un puits comme une dérive.

## Revendications

1. Agencement des pales (10) d'un mobile tournant tel qu'une hydrolienne comprenant une platine supérieure (12S) et une platine inférieure (12I) et au moins deux pales (10) et un axe de rotation ZZ, central, **caractérisé en ce que** chaque pale comprend un profil alaire avec un bord d'attaque (14) et un bord de fuite (16), un extrados et un intrados, ledit bord (14) d'attaque étant disposé à proximité immédiate de la périphérie extérieure de chaque platine et ledit bord (16) de fuite étant orienté vers l'intérieur et décalé par rapport à l'axe de rotation ZZ d'une distance (d), ces pales non jointives générant un passage (22) de recirculation.

2. Agencement de pales (10) d'un mobile tournant tel qu'une hydrolienne selon la revendication 1, **caractérisé en ce que** les pales (10) sont vrillées, c'est-à-dire que la platine (12S), supérieure est maintenue tandis que l'intersection du bord (14) d'attaque de chaque pale par rapport à la platine (12I) inférieure est déplacée vers l'aval, donc dans le sens de la rotation R du rotor et l'intersection du bord (16) de fuite de la pale est également déplacée vers l'aval par rapport à la platine (12I) inférieure, mais avec un déplacement moindre.

3. Agencement de pales (10) d'un mobile tournant tel qu'une hydrolienne selon la revendication 2, **caractérisé en ce qu'**il est prévu un second vrillage qui confère aux lignes des bords (14) d'attaque et des bords (16) de fuite, des profils courbes, le ventre de la courbure étant orienté vers l'aval, par rapport au sens de rotation R du rotor, de façon à présenter un meilleur coefficient de pénétration de l'extrados dans le fluide.

4. Agencement de pales (10) d'un mobile tournant tel qu'une hydrolienne selon la revendication 2 ou 3, **caractérisé en ce qu'**il est prévu des échappements (24) ménagés à travers les platines (12S), supérieure et (12I) inférieure.

5. Agencement de pales (10) d'un mobile tournant tel qu'une hydrolienne selon la revendication 4, **caractérisé en ce que** ces échappements (24) présentent une forme de croissant et sont ménagés immédiatement en amont de l'extrados de chaque pale.

6. Agencement de pales (10) d'un mobile tournant tel qu'une hydrolienne selon l'une quelconque des revendications précédentes, **caractérisé en ce qu'**il comprend au moins trois platines.

7. Agencement de pales (10) d'un mobile tournant tel qu'une hydrolienne selon l'une quelconque des revendications précédentes, **caractérisé en ce qu'**il comprend au moins un déflecteur.

8. Utilisation de l'agencement de pales d'un mobile tournant suivant l'une des revendications précédentes, pour la réalisation d'une hydrolienne.

9. Hydrolienne utilisant l'agencement de pales selon l'une des revendications 1 à 7, **caractérisée en ce qu'**elle comprend un générateur de courant avec des aimants disposés en périphérie des platines et des bobinages en regard sur un châssis fixe.

10. Hydrolienne selon la revendication 9, **caractérisée en ce que** la flottabilité est adaptée pour compenser au moins partiellement le poids.
